# EUROPEAN PATENT APPLICATION

(11) **EP 1 760 671 A1**
(43) Date of publication of application: **07.03.2007**
(21) Application number: 06119044.3
(22) Date of filing: 16.08.2006
(51) Int. Cl.: G07F 7/10

(54) **Unified reference ID mechanism in a multi-application machine readable credential**

(30) Priority: 15.08.2005 US 708531
(71) Applicant: Assa Abloy Identification Technology Group AB, 107 23 Stockholm (SE)
(72) Inventor: DAVIS, Michael L., AMHERT, NY 14228 (US)
(74) Representative: Grosfillier, Philippe

(57) **Abstract**

A system, method, and device are provided that allow a single credential to be easily used in multiple applications requiring a certain level of security. The single credential is loaded with a unified reference 1D that is accessible and verifiable by any other entity that wishes to load an application on the credential.

## Description

### CROSS-REFERENCE TO RELATED APPLICATIONS

This application claims benefit of United States provisional patent application serial number 60/708,531 tiled August 15, 2005, which is herein incorporated by this reference.

### FIELD OF THE INVENTION

Embodiments of the present invention are generally directed to multi-application transponders and access cards. More specifically, embodiments of the present invention provide a method of sharing selected card authentication information across multiple applications.

### BACKGROUND OF THE INVENTION

Radio frequency (RF) identification systems use contactless information acquisition technologies to identify objects at a distance and out of a line of sight. Such systems generally comprise RF transponders ("radio frequency identification" (RFID) devices, RF interrogators ("readers") of the RFID devices, and a controller or computerized database. The RFID devices typically are incorporated in credit card-like plastic enclosures (e.g., smart cards, ID/access cards, and the like) or directly attached, in a form of RF tags, to the products being monitored or packages thereof. In operation, the RFID device is presented to a reader that reads data from the RFID device, transmits the data to a controller or host system, where a decision is made to grant or deny access to an asset, such as a secure location, some sort of device like a computer or a secured account, such as a bank account, financial account, debit account, credit account, and/or merchant account. The controller may be centralized and communicate with a plurality of readers or it may be localized and associated with a single reader. The latter is referred to as a stand-alone reader.

There is an ever-increasing desire to use a single credential, like an RFID device, for both physical access to a building as well as logical access to a computing resource or financial accounts. The primary reason for this desire is user convenience. In the past, a user had to carry multiple credentials in order to utilize multiple applications like building access and computer access. One credential is used to gain access to rooms, while a second physically different credential is used to gain access to the computing resource.

Newer technology has enabled a user to carry a single credential that allows them to access multiple applications. Smart cards are a natural choice for both physical access and logical access applications due to their convenient form factor, high security capabilities, increasing memory storage capabilities, their ability to securely allow multiple applications to reside on the same card, and decreasing cost. As contactless smart cards evolve to provide more and more of the capabilities of contacted-based smart cards with even more convenience, the desire for a single convenient device becomes even more compelling.

With many different applications residing on a single device, there is now a desire to refer to the user of this device by a single reference number. For example, in a building access control application, credentials commonly have a card number stored in the memory of the credential. Typically, this data field is placed on an access card by the access control vendor. Security mechanisms utilizing keys are used to protect this data from being read or even altered by any readers other than building access readers provided by the vendor that loaded the card number onto the credential. If the same credential were to be used for second application supplied by a different vendor, the vendor of the second application would like to have access to the same card number so that the second application can refer to the card number as well. However, in order for the second vendor to have access to the card number stored on the first application, they must also be given access to other information relating to the first application. The sharing of this information, usually keys, passwords, encryption schemes, cryptograms, etc., may compromise the security of the building access system as well as the security of any other application that the first vendor provides. Accordingly, it has become increasingly difficult for vendors to share access to common information, like a card identification number, such that a single credential can be used for multiple applications, without each vendor divulging confidential information to each other, like security keys, passwords, cryptograms, encryption schemes, and other sensitive information. Stated more broadly, one way to use a single reference number for a single credential may potentially expose all of the vendors sharing the reference number to an increased risk of unauthorized access to secure networks or other types of security breaches.

An alternative is to store a different card number on a memory location allocated to the second application. This way each application can use and access its own card number using their own person keys and no information need be exchanged between the vendors of each application. This unfortunately does not allow each application to reference the credential by the same card number, and therefore is not an ideal solution because of the confusion that may occur with identifying the same card by different numbers.

Another alternative is to store redundant copies of the same card number at each application. However, most credentials have a limited amount of memory space and because of that, redundant storage of a card number for each application is somewhat inefficient. The actual card number is not a secret, in fact it is typically physically printed on the credential. Access to the card number in memory is what may compromise secrets of a particular vendor. Because of this, each application has been forced to redundantly store a personal copy of the card number on the same credential.

Of course the card number could be provided as data that is available to anyone to view and use. Unfortunately, this solution lends itself to a less secure and less reliable credential, mainly because there is no guarantee that the card number is the original card number. If the card number is available for anyone to freely access and use, then any entity, including an attacker, could change the card number and/or permissions to the card number thus making the credential unusable or unreliable, while simultaneously providing the attacker access to the user's accounts, assets, information, money, etc. Additionally, if every application loaded on a credential uses the card number in some way (e.g., as part of an encryption scheme, in conjunction with keys, or in the preparation of messages, etc.), a portion of data that is desired to be secret is made publicly available. In other words, if for one application the reference number is freely available, and in another application the number or a portion of it is used in an encrypted form, a potential attacker has a better chance of breaking the encryption code than they would have otherwise.

Another option would be to store the card number in a secure area requiring security keys for access. This particular option overcomes the issue of redundant use of memory. However, this option further introduces key management issues that complicate the process of distributing a credential among vendors.

### SUMMARY

The present invention generally is a system, method, and device that allow a credential to have a single reference ID, like a card number, that can be used in multiple applications without requiring vendors of each application to divulge sensitive information to each other.

In one embodiment of the present invention, a machine-readable credential is provided. The machine readable credential comprises a card identification number stored in a publicly accessible area of memory, a first application associated with a first entity, the first application comprising, first application data and card identification number authentication data that is used to determine an authenticity of the card identification number, and at least a second application associated with a second entity, the second application comprising, second application data and card identification number authentication data that is used to determine an authenticity of the card identification number. Multiple additional applications, *i.e.,* third, fourth, fifth, up to hundreds and thousands of applications associated with additional entities, may also be resident on the credential.

An application is a routine, data structure, or set of functions used to protect and allow access to various types of assets. Examples of applications include, but are not limited to, physical access applications like building access, room access, location access and logical access applications like computer access, file access, data access, financial account access (e.g., banks, investments, merchants, commodities, debit, credit, etc.), and other functions that may be used to maintain a particular level of security with respect to a given asset.

An entity may be used define different enterprises. For example, a first entity may be a first enterprise that conducts a first kind of business, and a second entity may be a second different enterprise that conducts a second kind of business. Alternatively, an entity may be used to refer to different parties within the same enterprise. For instance, the first entity may be a first person or group within an enterprise and the second entity may be a person or group within the same enterprise.

In accordance with embodiments of the present invention, a method of preparing a credential is also provided. The method comprises determining a card identification number for the credential, loading the card identification number on a publicly accessible area of memory, and loading a first application on the credential, where the first application comprises card identification number authentication data and first application data on a private area of the memory, and where the card identification number authentication data is used to determine the authenticity of the card identification number for purposes of the first application.

The card identification number is loaded on a publicly accessible area of memory so that when another (different) application is loaded onto the credential, that different application does not necessarily have to store its own publicly available version of the card identification number. This can free up memory space on the credential that would have otherwise been occupied by redundant versions of the same card identification number.

In accordance with embodiments of the present invention, an access control system is provided. The system comprises a plurality of credentials, at least one of which comprises a card identification number stored in a publicly accessible area of memory, a first application comprising first application data and card identification number authentication data that is used to determine an authenticity of the card identification number in association with the first application, and at least a second application comprising second application data and card identification number authentication data that is used to determine an authenticity of the card identification number in association with a second application, a first reader adapted to regulate access to a first asset based on the first application data, and a second reader adapted to regulate access to a second asset based on the second application data. It should be appreciated that additional applications and associated readers may be added to the system.

The system allows for the credential to be used for multiple applications. Thus, the user does not have to carry a credential for each application. Each application may correspond to a different reader and thus a different asset. Examples of assets that are regulated by a reader include, but are not limited to, buildings, rooms, locations, controls, computers, money, financial accounts, information, and so on.

Application data may include various types of information that are used by a given application to determine the authenticity of the credential and thus the holder of the credential. Examples of application data include, but are not limited to, holder name, title, rank, address, date of birth, social security number, manufacturer ID, PIN codes, bank account numbers, personal information, keys, passwords, configuration data (e.g., transmission protocols, transmission frequency, etc.), and other types of data that may be used by an application to determine the authenticity of the credential (e.g., determine whether the holder of the credential is allowed access to a particular asset or not).

The Summary is neither intended or should it be construed as being representative of the full extent and scope of the present invention. The present invention is set forth in various levels of detail and the Summary as well as in the attached drawings and in the detailed description of the invention and no limitation as to the scope of the present invention is intended by either the inclusion or non inclusion of elements, components, etc. in the Summary. Additional aspects of the present invention will become more readily apparent from the detailed description, particularly when taken together with the appended drawings.

### BRIEF DESCRIPTION OF THE DRAWINGS

Fig. 1 depicts a schematic diagram of an exemplary system for authenticating credentials in accordance with embodiments of the present invention;
Fig. 2 depicts schematic diagram of an exemplary credential in accordance with embodiments of the present invention;
Fig. 3 depicts a schematic diagram of multiple applications that are loaded onto a credential in accordance with embodiments of the prior art;
Fig. 4 depicts a schematic diagram of multiple applications and a unified reference ID that are loaded onto a credential in accordance with embodiments of the present invention; and
Fig. 5 depicts a flow diagram illustrating a method for loading multiple applications onto a single credential in accordance with embodiments of the present invention.

### DETAILED DESCRIPTION

The present invention generally is a credential with multiple applications loaded thereon. The invention advantageously addresses deficiencies of the prior art and may be utilized within the context of security systems, as well as be equally efficiently utilized in a broad range of other applications using interactive computerized data acquisition techniques, both contactless or requiring a physical contact with a carrier of pre-programmed information (e.g., monitoring moving objects, tracking inventory, verifying credit cards, and the like).

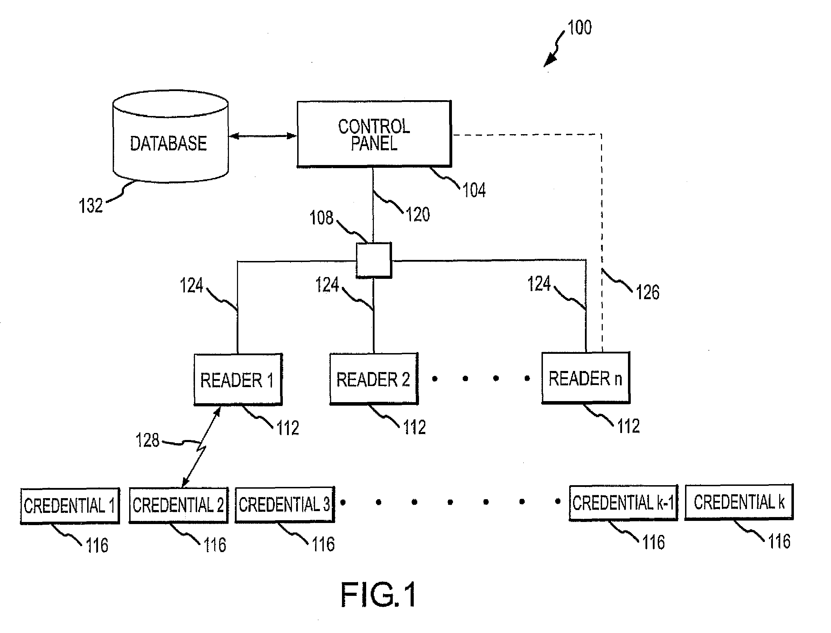

Referring initially to Fig. 1, an access system 100 used to verify the identity of at least one credential 116 will be described in accordance with embodiments of the present invention. In the depicted embodiment, the system 100 comprises a control panel 104, a hub 108, a plurality of readers 112₁₋ₙ, and a plurality of credentials 116₁₋ₖ such that n and k are integers wherein n≥1, k≥1, and typically k is greater than n. The plurality of readers 112₁₋ₙ may include readers 112 of the same type, as well as readers of different types. For example, a subset of the plurality of readers 112₁₋ₙ may be legacy readers (e.g. readers using older transmission protocols). Whereas another subset of the plurality of readers 112₁₋ₙ may be new readers utilizing more secure technologies and protocols. A subset of the plurality of readers 112₁₋ₙ may be used in relation to a first application and may be provided by a first vendor. A second subset of the plurality of readers 112₁₋ₙ may correspond to a second application and may be provided by a second different vendor.

In the depicted embodiment, the readers 112 are coupled to the control panel 104 via the interconnecting hub 108 through interfaces 120 and 124. In an alternate embodiment, the readers 112 may be directly coupled to the respective inputs/outputs of the control panel 104 via an alternate interface 126. Interfaces 120 and 124 between the readers 112, the hub 108, and the control panel 104 and interface 126 are generally bi-directional interfaces, which may selectively be implemented in a form of wired, wireless, fiber-optic communication links, or combinations thereof. Even though the interfaces 120, 124, and 126 are depicted as bi-directional interfaces, one of skill in art can appreciate that the interfaces 120 and 124 may be implemented as unidirectional interfaces that use a unidirectional communication protocol, for example, the Wiegand protocol.

As can be appreciated by one of skill in the art, the interfaces 120 and 124 may be implemented utilizing buses or other types of connections. For example, the I/O ports may be one or more of a USB port, parallel port, serial port, Small Computer Systems Interface (SCSI) port, modem, Ethernet, and/or an RF interface. The protocols used to communicate between the control panel 104 and the readers 112 may include one or more of the TCP/IP protocol, RS 232, RS 485, Current Loop, Power of Ethernet (POE), Bluetooth, ZigBee, GSM, WiFi, and other communication methods and protocols known in the art.

In the event that the credential 116 is a Radio Frequency Identification (RFID) device, bi-directional RF interfaces 128 between a reader 112 and the credential 116 are automatically established when the credential 116 is placed in an active zone of the interrogating reader. Herein, the active zone of a Radio Frequency (RF) reader 112 is defined as a three dimensional space where intensity of RF signals emitted by the reader exceeds a threshold of sensitivity of the credential 116 and intensity of RF signals emitted by the credential 116 exceeds a threshold of sensitivity of the reader 112.

The credential 116 may also be implemented in a number of other forms including, but not limited to, contact smart card, a contactless smart card, a proximity card, a magnetic stripe card, a Wiegand card, a PDA, a cellular phone and any other type of device used to store and transmit data relating a particular application. The active zone for each type of credential 116 may vary based upon the type of communications used between the reader 112 and the credential 116. For example, a magnetic stripe card is placed in the active zone of the reader 112 when it is swiped through the reader 112. As can be appreciated by one of skill in the art, the interface 128 is created upon presentation of the credential 116 to the reader 112 such that communications between the two is facilitated.

The control panel 104 may be a general-purpose computer adapted for multi-task data processing and suitable for use in a commercial setting. Alternatively, the control panel 104 may be implemented with a host computer and readers 112 can be connected to the host computer via a TCP/IP connection or other type of network connection. A memory of the control panel 104 comprises software program(s) containing a database of records for the system 100. Alternatively, a database 132 may be separated from the control panel 104 as depicted in Fig. 1. The database 132 whether integral to the control panel 104, separate from the control panel 104, or both, maintains records associated with the readers 112, credentials 116 and their respective holders or users, algorithm(s) for acquiring, decoding, verifying, and modifying data contained in the readers 112, algorithm(s) for testing authenticity and validity of the credentials 116, and algorithm(s) for implementing actions based on the results of these tests. Specific configurations of the control panel 104 are determined based on and compliant with computing and interfacing capabilities of the readers 112 and/or the hub 108.

As used herein, in reference to an individual or an object associated with a credential 116, the terms a "holder" and a "user" are used interchangeably.

Each reader 112 is adapted for exchanging information with the control panel 104 and for requesting data from the credential 116 placed in the active zone of the reader. The reader 112 may also be adapted for processing at least a portion of the data acquired from the credential 116. Alternatively, processing of the acquired data may be performed using the control panel 104 exclusively. In one embodiment, the reader 112 generates signals facilitating execution of the results of interrogating the credential 116 (e.g., engages/disengages a locking mechanism, allows/disallows movement of a monitored article, temporarily disables itself, activates an alarm system, updates a database, and the like). Alternatively, the control panel 104 may generate such signals. It should be appreciated that the results achieved by interrogating the credential may vary from this list depending upon the application, as would be known to those of skill in the art.

In accordance with embodiments of the present invention, a stand-alone reader 112 may be utilized to perform the functionality of both the reader 112 and the control panel 104. This stand-alone reader may include, or have access to, the database that contains data used to determine the authenticity of a credential and/or algorithm(s) used to make the determination of authenticity of the credential 116. A determination of authenticity for a credential is made at the receiving point rather than having to transmit data across a network from the reader to a control panel 104 in order to make a determination of authenticity. The stand-alone reader is further operable to execute instructions based upon the analysis of the credential 116.

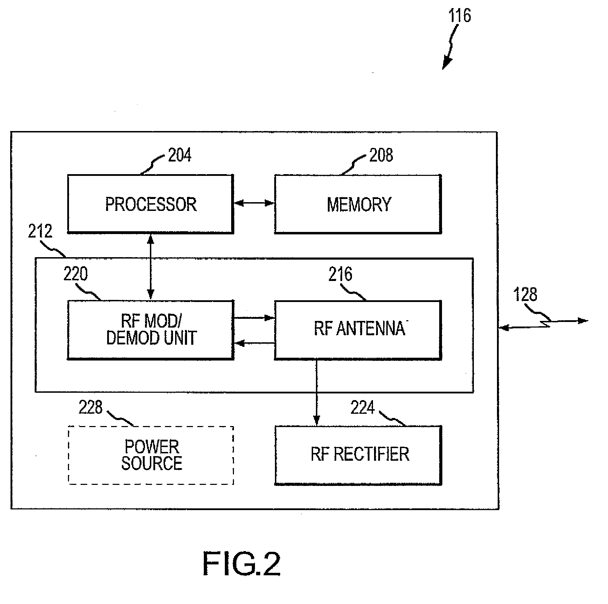

Fig. 2 depicts a schematic diagram of an exemplary RF enabled credential 116 in accordance with one embodiment of the present invention. Although well suited for use in credentials utilizing RF communications, many other types of acceptable credentials may be utilized in accordance with embodiments of the present invention. In the depicted embodiment, the credential 116 illustratively comprises a processor 204, a memory 208, a RF receiver/transmitter 212 including an RF antenna 216 and RF modulator/demodulator unit (MDU) 220 an optional RF rectifier 224, and/or an optional power supply 228. The processor 204 (e.g., application specific integrated circuit (ASIC), microprocessor, programmable controller, or other type of processor known in the art) uses bi-directional interfaces to communicate with the memory 208 and MDU 220 that facilitate data exchanges in the credential 116 and communications with an interrogating reader 112. In an alternate embodiment, at least portions of the MDU 220 may be incorporated in the processor 204.

The credential 116 may be fabricated as a system-on-chip (SoC) device, a system-in-package (SiP) device, or a system-in-module (SiM) device. In the SoC device, various functional components are integrated onto a single die. Accordingly, in SiP and SiM devices, several SoC devices are combined in a single package (SiP device) or an assembly including SoC and/or SiP devices (SiM device), respectively.

A "passive" RF enabled credential 116 uses RF signals (i.e., RF radiation) emitted by the reader 112 as a source of energy for powering the RF enabled credential 116. When a passive credential 116 comes within range of an interrogating reader 112, the reader 112 provides power to the credential 116 via a querying signal. The passive RF enabled credential 116 comprises the RF rectifier 224 (as shown in Fig. 2) converting a portion of RF power collected by the antenna 216 in the DC power facilitating operability of the credential 116. Such a credential 116 can operate only in the active zone of an interrogating reader and is inactive otherwise.

Alternatively, the credential 116 may comprise the internal (i.e., on-board) power source 228, such as one or several batteries and/or solar cells ("active" credential). In yet another embodiment, the credential 116 comprises both the RF rectifier 224 and the power source 228 ("semi-active" credential). Active and semi-active RF enabled credentials 116 can typically be used at greater distances from the readers than the passive ones, as well may be provided with additional computing and/or sensing capabilities.

In operation, the reader 112 and credential 116 use pre-programmed communication protocols. To increase probability of error-free reception, the same messages may redundantly be repeated a pre-determined number of times or during a pre-determined time interval. The interrogating reader 112 generates an interrogating RF signal. The interrogating RF signal of the interrogating reader 112 (or, in passive or semi-passive credentials, a portion of that signal) is received by the RFID antenna 216 and is forwarded to the MDU 206 that demodulates the RF signal and provides the demodulated signal for processing to the processor 204. When the received RF signal contains a request for data identifying the credential 116 and/or a holder of the credential, the controller accesses the memory 208 for this data and, via the MDU 206 and antenna 216, transfers the requested data to the reader 112.

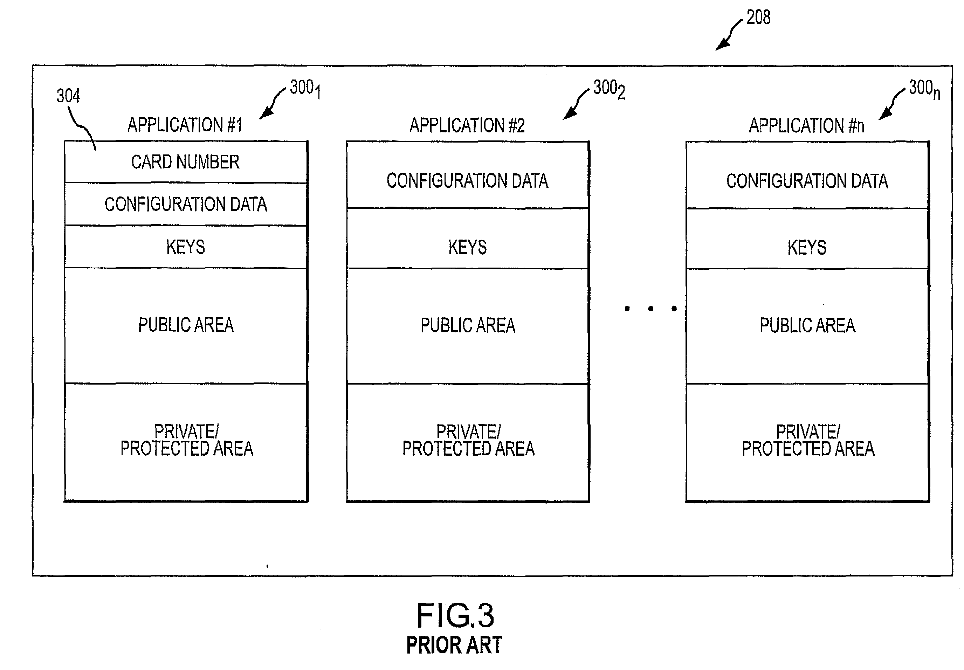

Referring now to Fig. 3, the memory 208 of a credential 116 according to embodiments of the prior art will be discussed. Prior to the present invention, a card number 304 was loaded onto the credential 116 under security of the first application. If the first application used the card number 304 for any reason, like encryption, then the card number 304 was maintained in a secure state. If any other entity wished to load an application on the same credential 116, then that entity would have to use a different memory block to store the same card number or they would have to create their own card number for their particular application. Subsequent applications from different entities (two, three, four, one hundred, *etc.*) were typically not allowed access to a memory block belonging to the first application and were not allowed access to the security mechanisms employed by the first entity or any other entity, and vice versa.

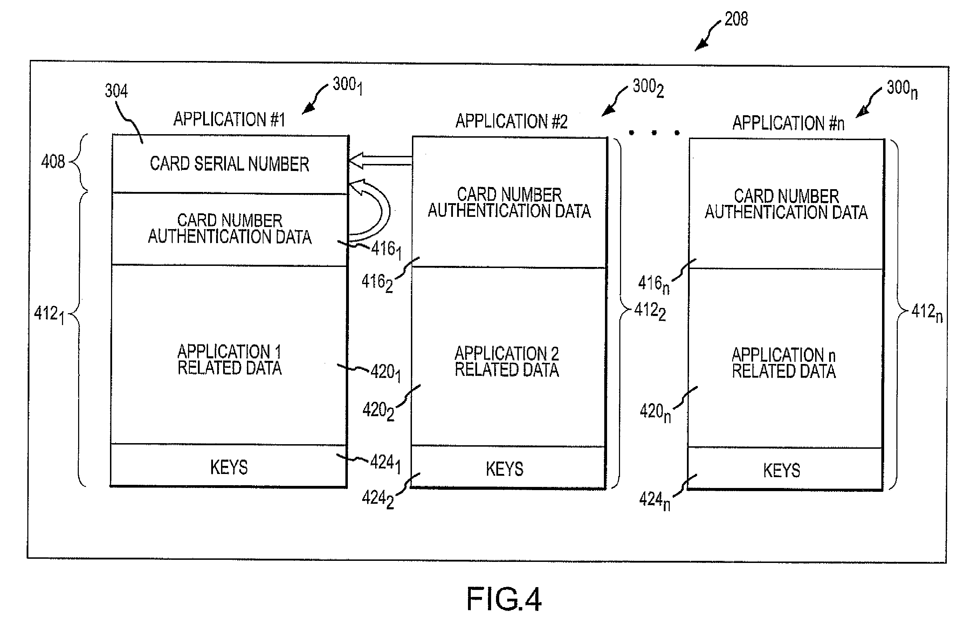

Referring now to Fig. 4 the memory/information storage area 208 of an exemplary credential 116 will be described in accordance with embodiments of the present invention. Multiple applications 300₁₋ₙ may be loaded onto the memory 208 of the credential 116. Each application 300 may be provided and correspond to a different entity (vendor) or a single vendor may provide more than one application 300 on a given credential 116. Examples of applications that may be loaded on a credential 116 include, but are not limited to, physical access applications like building access, room access, location access and logical access applications like computer access, file access, data access, financial account access, and other functions that may be used to maintain a particular level of security with respect to a given asset.

When the first entity/vendor loads a first application 300₁ on the credential 116, the card number 304 is loaded at the same time in a publicly accessible area of memory 408. The publicly accessible area of memory 408 may be completely open to the public or a password may be required to access it. Moreover, the publicly accessible are of memory 408 may include Readable/Writable memory or Read-Only memory, with Read-Only memory being preferred. Regardless, once the password is known, any other application 300 can be loaded onto the credential 116 and can simply reference the original card number 304, rather than allocate another block of memory to the redundant storage of a card number 304. The rest of the data stored in the memory 208 may be used to store the actual application information. Application information includes, but is not limited to, card number authentication data 416, application related data 420 (*e.g.* credential access permissions, access restrictions, credential holder data, configuration data, manufacturer data, encryption schemes, and other data used in the first application 300₁), and keys 424 stored in a private area of memory 412. The card number authentication data 416 is used to ensure that the card number data 304 has not been tampered with and/or altered. Examples of suitable card number authentication data 416 include, but are not limited to, cryptograms, check sums, hashes, certified copies of the card number, or other mechanisms that make use of the correct card number in some fashion. The other applications may also include card number authentication data 416 that are different, or use different schemes. The card number authentication data 416 is especially useful when the application data 420 (of one or more of the applications) uses the card number 304 as a part of one of its functions. If the card number 304 is to be used by an application 300, the integrity of that number should be verified by the application 300 prior to use.

Both card number authentication data 416 and application related data 420 stored on each subsequent application 300₂₋ₙ may be maintained in a secure area of memory 412₂₋ₙ. No additional memory space is required for storing another public version of the card number. The entity that is supplying the second application, if different from the entity supplying the first application, may be given a password or the like to access the public area 408 containing the serial number 304.

As used herein, "publicly" accessible may be construed to mean that information stored is available to entities that have been given access rights to the public area 408 by a password. In this sense, the publicly accessible memory region 408 is actually available to entities that have been given permissions to access it. Usually, the original credential vendor 116 will supply subsequent vendors/entities (*e.g.,* a different person or group working in the same enterprise or a completely different enterprise) with the password when the credentials 116 are delivered. This allows any subsequent vendor/entity to access and use the card number 304 on the first application 300₁, rather than either not using it, or storing it again on the new application. The second application 300₂ typically includes application related data as well as the vendor's respective keys. The data for the second application 300₂ is stored in a private memory area 412₂ such each vendor supplying an application 300 on the credential 116 does not have to worry about other vendors figuring out, stealing, and or divulging data that each vendor would like to keep secret. Various mechanisms including, but not being limited to, mutual authentication techniques, challenge/response mechanisms, and rolling code schemes typically protect the application data for the first and/or second application. The publicly accessible area of memory 408 may be freely transmitted to a reader 112 upon placing the credential 116 within an active zone of the reader 112 or may be transmitted in response to a request by the reader 112.

The credential 116, when employing mutual authentication techniques, generally requires validation of a reader 112 prior to allowing the reader 112 to read data from the credential 116. Likewise, the reader 112 generally requires validation of the credential 116 prior to allowing the holder of the credential 116 access to a particular asset.

In one embodiment, a challenge/response mechanism may be employed where the reader 112 issues a number of challenges to the credential 116. The credential 116 then properly must respond to each challenge in order to verify its validity to the reader 112. If the credential 116 does not reply in a manner consistent with the required reply, then the credential 116 is determined to be invalid. If the credential 116 does reply to each challenge properly, then the credential 116 is determined to be valid and is typically given access to an asset associated with the reader 112.

In order to provide a more secure credential, the card number data 304 may be maintained in a read-only memory. This ensures that the card number is not accidentally, or purposely, changed. The card number authentication data 416₁₋ₙ also provides a security mechanism against tampering and altering of the card number 304, but by storing the card number data 304 in read-only memory, accidents may be avoided.

The memory 208 of a passive credential generally comprises at least one array of non-volatile memory cells, e.g., Erasable Programmable Read Only Memory (EPROM) cells or FLASH memory cells, among other types of non-volatile memory cells. The memory 208 of an active credential 116 may additionally comprise at least one array of Dynamic Random Access Memory (DRAM) cells, Static Random Access Memory (SRAM) cells or other types of memory that are typically used in conjunction with a power source. A content of at least a portion of the memory 208 may be pre-programmed and write-protected thereafter, whereas the content of other portions of the memory may selectively be modified or erased using the reader 112.

In accordance with embodiments of the present invention, the memory 208 may further comprise credential authentication data and/or authenticating functions as a part of the application related data 420. Examples of credential authentication data include, but are not limited to, assets the credential 116 has access to, times of allowed access to each asset, and other data that can help the credential 116 determine if it is eligible to gain access to a particular asset. The authenticating functions use the credential authentication data to enable the credential 116 to make a determination of its own access rights with respect to an asset.

A credential 116 that determines its own access rights and permissions is typically referred to as a smart card, however such functions can also be performed by proximity cards. In operation, a "smart" credential 116 is presented to a reader 112. The reader 112 is associated with one or more assets and the reader 112 is the gatekeeper of those assets. The reader 112 contains information about its associated assets and usually time of day information. Upon presentation of the credential 116 to the reader 112, the reader 112 supplies the asset information and time of day information to the credential 116. The credential 116 then analyzes the asset information and time of day information using its credential authentication data. The credential 116 then makes a determination whether it is allowed to access the given asset (e.g., whether the holder of the credential 116 can have access to a room behind a door, a bank account, computer files, *etc*.) If the credential 116 determines that it is allowed access to the particular asset, then it sends a signal back to the reader 112 indicating that validation of the credential 116 has been confirmed and access should be granted. Upon confirmation of validation of the credential 116, the reader 112 will unlock the door, access the bank account, permit access to the computer files, or perform the requisite steps to grant access to the holder of the credential 116. If the credential 116 determines that it is not allowed access to the particular asset, then it can either do nothing or send a signal back to the reader 112 indicating that validation of the credential 116 was not confirmed and access should not be granted. Upon the receipt of this signal, the reader 112 may perform no action, generate a message indicating that access was not granted, sound an alarm, or perform some other sort of action in accordance with denying the holder of the credential 116 access to the asset.

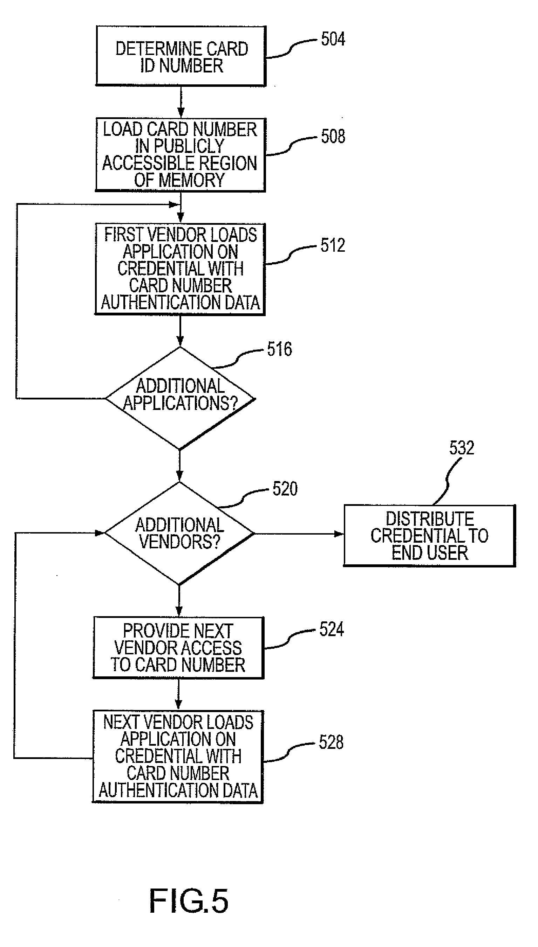

Referring now to Fig. 5 a method of loading multiple applications on a single credential 116 will be described in accordance with embodiments of the present invention. Initially, the credential 116 is given an identification number like a card number (304 in Fig. 4)(step 504). The card number may be given to the credential 116 upon creation of that credential 116 or upon the loading of information on the credential 116. The card number is then loaded in the publicly accessible region of memory 408 (step 508). At the same time, or thereafter, a first vendor loads a first application 420₁ on the credential 116 along with card number authentication data 416₁ and/or keys 424₁ if necessary (step 512). Prior to loading an application on the credential 116 thus vouching for the authenticity of the card number, the first vendor may wish to ensure the card number is authentic. The first vendor may determine that the card number is authentic in a number of different ways. As one example, the card number may be provided to the first vendor in a separate secure shipment from the credentials 116. Then the card number from the secure shipment can be compared to the actual card numbers of the credentials 116. Other known methods of ensuring card authenticity may also be employed.

In step 516, it is determined if the first vendor has any additional application that need to be loaded onto the credential 116. If additional applications are to be loaded on the credential 116 by the first vendor, then the method returns to step 512 to load another application along with card number authentication data. Once the first vendor has loaded all of the applications on the credential 116 that they wish, it is determined if any additional vendors will be adding applications to the credential 116 (step 520). If additional vendors will be loading one or more applications onto the credential 116, then the next vendor is given access to the card number 304 in memory 408 (step 524). This may be done by providing the vendor with a password to access the card number 304 or by informing the vendor of the memory address that is storing the card number data 304. Once the next vendor has access to the card number data 304, the next vendor loads the desired application 412₂ onto the credential along with card number authentication data 416 (step 528).

Of course, additional applications may also be loaded on the credential after it is in the end user's possession. Such applications may be loaded on the credential by the end user or by another vendor.

As can be appreciated, the card number authentication data 416 may be a function or algorithm that verifies the authenticity of the card data 304 or may be a lookup table used by the processor 204 of the credential 116 to determine if the card number data 304 is valid prior to use in a given application. The card number authentication data 416 may also be a digital certificate, a cryptogram, or an additional copy of private data. A digital certificate is an attachment to an electronic message used for security purposes. The digital certificate verifies the sender of the message to be who he/she claims to be and sometimes provides the receiver with a way to encode a reply. A cryptogram is generally any type of mathematical proof function. One example of a cryptogram is a type of word puzzle in which each character is replaced by a different character according to rules, which are typically known by the recipient. This way, when the recipient receives the message, they can use the rules to "build" the original message from the encrypted message. Typically, cryptograms rules are based on a key or some other secret information. Additionally, a cryptogram may be generated using a card identification number, a random number, or some type of rolling code that changes over time.

Just like the first vendor, any subsequent vendor may provide more than one application 300 on a given credential 116. Once the second vendor has loaded all of the desired applications 300 onto the credential 116, the method again determines if any additional vendors are going to load an application onto the credential (step 520). Once all of the vendors have loaded the desired applications 300₁₋ₙ onto the credential 116, the credential 116 is distributed to an end user 532.

The present invention, in various embodiments, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, includes providing devices and processes in the absence of items not depicted and/or described herein or in various embodiments hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Detailed Description, with each claim standing on its own as a separate preferred embodiment of the invention.

Moreover though the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A machine readable credential, comprising:
a card identification number stored in a publicly accessible area of memory;
a first application associated with a first entity comprising first application data and card identification number authentication data that is used to determine an authenticity of said card identification number; and
at least a second application associated with at least a second entity comprising second application data and second card identification number authentication data that is used to determine an authenticity of said card identification number, wherein the first and at least second application are operable to use the card identification number as a way of referring to the credential.

2. The credential of claim 1, wherein said first application data cannot be read and/or altered by said at least a second entity.

3. The credential of claim 1, wherein said card identification number is stored in a read only area of memory.

4. The credential of claim 1, wherein at least one of said first and at least second application data is protected by keys.

5. The credential of claim 1, wherein at least one of said first and at least a second application data is protected by at least one of mutual authentication techniques, challenge/response mechanisms, and rolling code schemes.

6. The credential of claim 1, wherein at least one of said first and at least a second application comprise credential authentication data.

7. The credential of claim 6, wherein said credential authentication data is used by said credential to determine its access permissions to an asset.

8. The credential of claim 7, wherein the asset is one of a building, secure room, computer, file, data, and financial account.

9. The credential of claim 1, wherein the card identification number authentication data of at least one of said first and at least a second application is at least one of a digital certificate, a hash, a checksum, a cryptogram, and an additional copy of said card identification number.

10. The credential of claim 9, wherein said card identification number authentication data is a cryptogram and wherein said cryptogram is created from a cryptographic combination of at least one of said card identification number, a random number, a key, and a rolling code.

11. The credential of claim 1, wherein said credential is at least one of a contact smart card, a contactless smart card, a proximity card, a magnetic stripe card, a Wiegand card, a PDA, and a cellular phone.

12. The credential of claim 1, further comprising at least a third application associated with a third entity comprising third application data and third card identification number authentication data that is used to determine an authenticity of said card identification number, and wherein the at least a third application is operable to use the card identification number as a way of referring to the credential.

13. A method of preparing a credential, comprising:
loading a card identification number on a publicly accessible area of memory;
loading a first application on said credential, wherein said first application comprises first card identification number authentication data and first application data on a private area of memory; and
wherein said first card identification number authentication data is used to determine the authenticity of said card identification number for purposes of the first application.

14. The method of claim 13, further comprising:
loading a second application on said credential, wherein said second application comprises card identification number authentication data and second application data on a private area of memory, and wherein the second application uses the card identification number to refer to the credential.

15. The method of claim 14, wherein said information to access is a password.

16. The method of claim 14, wherein said information to access is a memory location.

17. The method of claim 14, further comprising:
loading a third application on the credential, wherein said third application comprises third card identification number authentication data and third application data on a private area of memory, and wherein the third application uses the card identification number to refer to the credential.

18. The method of claim 13, wherein said publicly accessible area of memory is read only.

19. The method of claim 13, wherein said private area of memory is protected by at least one of mutual authentication techniques, challenge/response mechanisms, and rolling code schemes.

20. The method of claim 13, wherein said loading said card identification number and said first application is performed at substantially the same time.

21. The method of claim 13, wherein said first application is used to gain access to a first asset and said second application is used to gain access to a second asset.

22. The method of claim 13, wherein said card identification number authentication data is at least one of a digital certificate, a hash, a checksum, a cryptogram, and an additional copy of said card identification number.

23. An access control system, comprising:
a plurality of credentials, at least one of which comprises:
a card identification number stored in a publicly accessible area of memory;
a first application comprising first application data and card identification number authentication data that is used to determine an authenticity of said card identification number in association with the first application; and
at least a second application comprising second application data and card identification number authentication data that is used to determine an authenticity of said card identification number in association with the at least a second application;
a first reader adapted to regulate access to a first asset based on said first application data; and
a second reader adapted to regulate access to a second asset based on said second application data.

24. The system of claim 23, further comprising a control panel in communication with at least one of said first and second readers, wherein said control panel is operable to determine at least one of the following:
access rights of said at least one credential for said first asset based on said first application data; and
access rights of said at least one credential for said second asset based on said second application data.

25. The system of claim 23, wherein at least one of said first and second readers is a stand-alone reader.

26. The system of claim 23, wherein said card identification number is stored in read only memory.

27. The system of claim 23, wherein said card identification number is password protected.

28. The system of claim 23, wherein said first application is associated with a first entity and said second application is associated with a second entity and wherein said first application data cannot be read and/or altered by said second entity.

29. The system of claim 23, wherein at least one of said first and second application data is protected by keys.

30. The system of claim 23, wherein at least one of said first and second application data is protected by at least one of mutual authentication techniques, challenge/response mechanisms, and rolling code schemes.

31. The system of claim 23, wherein said at least one credential is at least one of a contact smart card, a contactless smart card, a proximity card, a magnetic stripe card, a Wiegand card, a PDA, and a cellular phone.

32. The system of claim 23, wherein said card identification number authentication data of at least one of said first and at least a second application is at least one of a digital certificate, a hash, a checksum, a cryptogram, and an additional copy of said card identification number.

33. The system of claim 23, wherein the at least one credential further comprises:
a third application comprising third application data and third card identification number authentication data that is used to determine an authenticity of said card identification number in association with the third application.

34. The system of claim 23, wherein the first application uses the card identification number to identify the credential to the first reader, and wherein the at least a second application uses the card identification number to identify the credential to the second reader.
